# EUROPÄISCHE PATENTSCHRIFT

(11) **EP 4 093 673 B1**
(45) Veröffentlichungstag und Bekanntmachung des Hinweises auf die Patenterteilung: **17.01.2024**
(21) Anmeldenummer: 21701315.0
(22) Anmeldetag: 21.01.2021
(51) Int. Cl.: B64F 1/00, B63B 35/50, E01F 3/00

(54) **LANDEBEREICHSANORDNUNG MIT MEHREREN ABNEHMBAREN SEGMENTEN SOWIE VERFAHREN ZUM BETREIBEN EINER SOLCHEN LANDEBEREICHSANORDNUNG**
LANDING AREA COMPRISING MULTIPLE REMOVABLE SEGMENTS AND METHOD TO OPERATE SAID LANDING AREA
AIRE D'ATTERRISSAGE COMPRENANT UNE PLURALITÉ DE SEGMENTS AMOVIBLES AINSI QUE PROCÉDÉ D'OPÉRATION DE LADITE AIRE

(30) Priorität: 22.01.2020 DE 102020101486
(43) Veröffentlichungstag der Anmeldung: 30.11.2022
(73) Patentinhaber: Koch Engineering GmbH &Co. KG, 73347 Mühlhausen i.T. (DE)
(72) Erfinder: HUBER, Martin, 89231 Neu-Ulm (DE); MOLLWEIDE, Markus, 88250 Weingarten (DE)
(74) Vertreter: Hofstetter, Schurack & Partner
(86) Internationale Anmeldenummer: PCT/EP2021/051306
(87) Internationale Veröffentlichungsnummer: WO 2021/148520

(56) Entgegenhaltungen:
- WO-A1-92/12894
- US-A1- 2010 200 694

## Beschreibung

Die Erfindung betrifft eine Landebereichsanordnung für, insbesondere senkrechtstartfähige, Luftfahrzeuge mit mehreren Segmenten, welche in einem Betriebszustand zusammen einen Landebereich ausbilden, einem Stauraum, in welchem die mehreren Segmente in einem Lagerzustand zumindest teilweise verstaubar sind, und einer Basis mit einem drehbaren Rotorelement, um die mehreren Segmente zur Überführung in den Betriebszustand und/oder in den Lagerzustand zu rotieren. Außerdem betrifft die Erfindung ein Verfahren zum Betreiben einer solchen Landebereichsanordnung.

Zum Landen benötigen Luftfahrzeuge, insbesondere senkrechtstartfähige Luftfahrzeuge, eine geeigneten Landeplatz. Einerseits ist es senkrechtstartfähigen Luftfahrzeugen möglich, auf vielerlei, auch hierfür nicht spezifisch ausgebildetem, Untergrund zu landen. Auf Häusern, Schiffen, Bohrinseln oder ähnlichen Landezielen ist jedoch üblicherweise die Anordnung einer Landeplattform vorgesehen. Eine solche Landeplattform kann beispielsweise rund oder vieleckig ausgestaltet sein. Dabei ist die Landeplattform auf die darauf zu landenden Luftfahrzeuge hinsichtlich ihrer Größe und Tragkraft angepasst. Im Wesentlichen zeichnet sich eine solchen Landeplattform durch eine ebene Fläche aus, welche einen Landebereich für das Luftfahrzeug bildet.

Beispielsweise aus der US 2018/03 70 652 A1 und aus der WO 2011/135 605 A2 ist die Verkleinerung einer solchen Landeplattform durch einen jeweiligen Klappmechanismus bekannt, wenn die Landeplattform nicht benötigt wird.

Die US 2010/02 00 694 A1 schlägt einen Landebereich vor, der ein Zusammenfalten sowie eine Lagerung in oder an einer Halterung, an der er angeordnet ist, ermöglicht. Beispielsweise können mehrere an einer Basis festangeordnete Segmente durch einen in der Basis enthaltenen Zylinder angehoben werden und anschließend aufgefächert werden.

Zudem offenbart die WO 92/12894 A1 ein Hubschrauberdeck für ein Schiff, das eine größere Querausdehnung als die Breite des Schiffes hat. Es besteht aus einem ebenen, horizontalen, am Schiff befestigten Deckabschnitt. Entlang mindestens einer der Längskanten des festen Decksabschnitts ist ein plattenförmiger Decksabschnitt beweglich angeordnet, der an seiner einen Längskante mit der Kante des festen Decksabschnitts fest verbunden ist. Der plattenartige Decksabschnitt kann in eine Position oberhalb des permanenten Decksabschnitts angehoben werden und ist in dieser Position drehbar, wobei das Drehzentrum so angeordnet ist, dass sich der plattenartige Abschnitt in seiner gedrehten Position innerhalb der Seiten der Bordwand befindet.

Ein Problem, das der Stand der Technik zeigt, ist beispielsweise, dass die Höhe der einzelnen Segmente ausgeglichen werden muss, um einen ebenen Landebereich zu schaffen.

Es ist Aufgabe der vorliegenden Erfindung, eine Landebereichsanordnung zu schaffen, welche einen leichteren technischen Aufbau ermöglicht.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche.

Die Erfindung geht aus von einer Landebereichsanordnung für, insbesondere senkrechtstartfähige, Luftfahrzeuge, mit mehreren Segmenten, welche in einem Betriebszustand zusammen einen Landebereich ausbilden, einem Stauraum, in welchem die mehreren Segmente in einem Lagerzustand zumindest teilweise verstaubar sind, und einer Basis mit einem drehbaren Rotorelement, um die mehreren Segmente zur Überführung in den Betriebszustand und/oder in den Lagerzustand zu rotieren.

Um wie oben dargestellt einen einfachen Aufbau zu ermöglichen, ist erfindungsgemäß vorgesehen, dass zumindest einzelne der mehreren Segmente abnehmbar an dem Rotorelement befestigt sind und eine Befestigungseinheit der Landebereichsanordnung dazu ausgebildet ist, die abnehmbaren Segmente bei der Überführung in den Betriebszustand an dem Rotorelement zu befestigen und bei der Überführung in den Lagerzustand diese Befestigung zu lösen.

Die mehreren Segmente können untereinander gleichartig geformt sein. Dies ermöglicht eine einfache Austauschbarkeit der einzelnen Segmente. Alternativ kann es vorgesehen sein, dass nur einzelne Segmente untereinander gleich sind, während sich andere der Segmente von diesen unterscheiden. Zuletzt ist es auch möglich, dass alle der mehreren Segmente unterschiedlich geformt sind. In dem Betriebszustand sind die mehreren Segmente bestimmungsgemäß an dem Rotorelement befestigt. In diesem Zustand bilden die mehreren Segmente den Landebereich. Insbesondere erstreckt sich der Landebereich um die Oberfläche des Rotorelements herum. Beispielsweise kann die Oberfläche des Rotorelements Teil des Landebereichs sein. Mit anderen Worten kann die Oberfläche des Rotorelements (insbesondere hinsichtlich einer Vogelperspektive) Teil der ebenen Fläche sein, die den Landebereich ausbildet. Dabei kann es vorgesehen sein, dass diese Oberfläche des Rotorelements an jedes der mehreren Segmente angrenzt. In dem Betriebszustand der Landebereichsanordnung kann das Rotorelement in einem Mittelpunkt und/oder Schwerpunkt des Landebereichs angeordnet sein. Mit anderen Worten können die mehreren Segmente in dem Betriebszustand so um das Rotorelement angeordnet sein, dass dieses den Mittelpunkt und/oder Schwerpunkt des Landebereichs bildet. Mit Schwerpunkt kann dabei einerseits der geometrische Schwerpunkt oder andererseits der Schwerpunkt hinsichtlich der Gewichtsverteilung sein. Die Gewichtsverteilung kann dabei durch die mehreren Segmente alleine oder durch die mehreren Segmente zusammen mit einem Soll-Luftfahrzeug vorbestimmter Größe und vorbestimmten Gewichts berechnet sein.

Das Rotorelement ist drehbar an der Basis befestigt. Mit anderen Worten kann zumindest ein Teil des Rotorelements eine Drehung bezüglich der Basis ausführen. Dabei sorgt die Basis insbesondere für die Krafteinleitung von an dem Rotorelement wirkenden Kräften in einem Untergrund. Bei dem Untergrund oder Installationsort kann es sich beispielsweise um den Boden, eine Betonplatte, einen Teil eines Gebäudes, einen Teil einer Plattform, insbesondere einer schwimmenden Plattform wie einer Bohrinsel oder dergleichen, oder um ein Schiff handeln. Insbesondere ist die Rotationsachse des Rotorelements, also die Achse, um welche eine Rotation des Rotorelements ermöglicht beziehungsweise vorgesehen ist, senkrecht zu der Ausdehnung des Landebereichs und/oder vertikal ausgerichtet. Vorteilhafterweise ist der Landebereich bezüglich zweier unterschiedlicher Raumrichtungen waagerecht ausgerichtet. Dies bedeutet insbesondere, dass eine Flächennormale einer durch den Landebereich aufgespannten Ebene vertikal verläuft. Die genannte Flächennormale kann parallel zur zuvor genannten Rotationsachse sein.

Der Stauraum ist dazu ausgebildet, die mehreren Segmente aufzunehmen beziehungsweise zu lagern, während sich die Landebereichsanordnung in dem Lagerzustand befindet. Mit anderen Worten sind die mehreren Segmente in dem Lagerzustand zumindest teilweise in dem Stauraum verstaut beziehungsweise aufgenommen oder angeordnet. Es kann vorgesehen sein, dass alle abnehmbaren Segmente in dem Lagerzustand vollständig innerhalb des Stauraums angeordnet sind. Mit anderen Worten kann vorgesehen sein, dass diejenigen der mehreren Segmente, welche abnehmbar an dem Rotorelement befestigt sind, in dem Lagerzustand vollständig innerhalb des Stauraums beziehungsweise verstaut sind. Insbesondere ist der Stauraum ausgebildet, die mehreren Segmente übereinander gestapelt zu lagern.

Das Merkmal, dass einzelne der mehreren Segmente an dem Rotorelement abnehmbar befestigt sind, bezieht sich insbesondere auf den Betriebszustand. Mit anderen Worten sind die zumindest einzelnen der mehreren Segmente insbesondere in dem Betriebszustand abnehmbar an dem Rotorelement befestigt. Es kann vorgesehen sein, dass die zumindest einzelnen der mehreren Segmente, welche in dem Betriebszustand abnehmbar an dem Rotorelement befestigt sind, in dem Stauraum verstaut sind, während sich die Landebereichsanordnung in dem Lagerzustand befindet. In diesem Zustand sind die entsprechenden abnehmbaren Segmente an dem Rotorelement befestigbar.

Die Befestigungseinheit ist dazu ausgebildet, die abnehmbaren Segmente bei der Überführung in den Betriebszustand an dem Rotorelement zu befestigen und bei der Überführung in den Lagerzustand diese Befestigung zu lösen. Mit anderen Worten kann die Befestigungseinheit dazu ausgebildet sein, bei der Überführung in den Betriebszustand eine lösbare Verbindung zwischen den jeweiligen Segmenten und dem Rotorelement herzustellen. Dabei erfolgt das Befestigen der abnehmbaren Segmente durch die Befestigungseinheit insbesondere individuell für jedes einzelne der abnehmbaren Segmente. Mit anderen Worten kann die Befestigungseinheit dazu ausgebildet sein, das Befestigen der abnehmbaren Segmente einzeln und vorzugsweise nacheinander für jedes der abnehmbaren Segmente durchzuführen. Das zuvor genannte gilt analog auch für das Lösen der Befestigung, Insbesondere ist die Befestigungseinheit dazu ausgebildet, die Befestigung der abnehmbaren Segmente an dem Rotorelement bei der Überführung in den Lagerzustand zu lösen. Dabei erfolgt das Lösen der Befestigung insbesondere individuell beziehungsweise einzeln für jedes der abnehmbaren Segmente. Mit anderen Worten kann die Befestigungseinheit dazu ausgebildet sein, die lösbare Befestigung der abnehmbaren Segmente bei der Überführung in den Lagerzustand jeweils einzeln und vorzugsweise nacheinander zu lösen.

Die Befestigungseinheit kann ausschließlich an dem Rotorelement oder ausschließlich an den jeweiligen Segmenten angeordnet sein. Vorteilhafterweise ist die Befestigungseinheit jedoch teilweise an dem Rotorelement und teilweise an jedem der mehreren Segmente angeordnet. Mit anderen Worten kann die Befestigungseinheit einen rotorseitigen Teil sowie einen segmentseitigen Teil aufweisen. Beispielsweise kann die Befestigungseinheit Schrauben, einen Einrastmechanismus, Seile beziehungsweise einen Flaschenzug, hydraulische Elemente oder dergleichen aufweisen. Das abnehmbare Befestigen kann beispielsweise kraftschlüssig oder formschlüssig erfolgen.

Insbesondere ist es durch die Landebereichsanordnung ermöglicht, diese auf technisch einfache Weise zu verstauen. Ein weiterer Vorteil liegt darin, dass die abnehmbaren Segmente frei in dem Stauraum angeordnet sind. Mit anderen Worten kann vorgesehen sein, dass die abnehmbaren Segmente in dem Lagerzustand keine Befestigung aneinander und/oder keine Befestigung am Stauraum und/oder keine Befestigung an einem anderen Teil der Landebereichsanordnung aufweisen. Es ist beispielsweise vorgesehen, dass die abnehmbaren Segmente nur durch ihre eigene Gewichtskraft und/oder die Formgebung des umgebenden Stauraums vor Verrutschen gesichert sind. Auch erfolgt durch das Verstauen der mehreren Segmente in dem Stauraum keine Belastung des Rotorelements durch die abgenommenen Segmente. Dies ist insbesondere im Falle von hohem Seegang ein Vorteil, welcher den Verschleiß an der Landebereichsanordnung verringern kann.

Der Stauraum kann sich optionalerweise auch an einem völlig anderen Ort wie die restliche Landebereichsanordnung befinden. Es ist beispielweise auch möglich, dass eine Transporteinrichtung (etwa ein Förderband oder ein Transportfahrzeug) vorgesehen ist, welche ausgebildet ist, die abnehmbaren Segmente zwischen dem Stauraum und der Rotoreinheit zu transportieren. Alternativ ist es möglich, dass der Stauraum oberhalb des Landebereichs (bezogen auf den Betriebszustand) angeordnet ist. Die Segmente werden in diesem Fall zum Andocken an das Rotorelement abgelassen. Dies ist insbesondere dann sinnvoll, wenn unter dem Landebereich nicht ausreichend Bauraum zur Verfügung steht.

Die Landebereichsanordnung weist eine Hubeinheit auf, welche eines oder mehrere in oder an dem Stauraum angeordnete Hubelemente aufweist, um die abnehmbaren Segmente bei der Überführung in den Betriebszustand in Richtung des Rotorelements zu bewegen. Hierbei bedeutet in Richtung des Rotorelements, dass die Bewegung sowohl vertikale als auch horizontale Richtungskomponenten aufweisen kann. Insbesondere sind das oder die Hubelemente im Bereich von Seitenwänden des Stauraums angeordnet. Die Seitenwände können ergänzend eine Funktion als Gehäuseabdeckung wahrnehmen zum Schutz gegen Außeneinflüsse sowie des Weiteren die Festigkeit der Landebereichsanordnung in Ergänzung zur Basis erhöhen. Die oberseitige Abdeckung des Gehäuses im eingefahrenen Zustand erfolgt über das oberste Segment. Der Stauraum bzw. das Gehäuse der Hubeinheit erfüllt des Weiteren eine Schutzfunktion gegen horizontale, ungewollte Bewegungen der Segmente auf Grund von Außeneinflüssen. Optional greifen die Hubelemente beispielsweise jeweils mit einem Arm von außen in den Stauraum.

Die Hubelemente können im Wesentlichen eine Ausdehnung in vertikaler Richtung haben. Die Hubeinheit beziehungsweise deren Hubelemente können einen oder mehrere Freiheitsgrade hinsichtlich ihrer Bewegung haben. Zumindest weist die Hubeinheit beziehungsweise deren Hubelemente einen Freiheitsgrad in vertikaler Richtung auf, gegebenenfalls auch in horizontaler bzw. in radialer Richtung. Die Hubeelemente können jeweils einen hydraulischen, elektrischen, pneumatischen und/oder alternativen Aktor aufweisen. Ergänzend kann eine Positionsbestimmung einzelner Segmente durch geeignete Sensorik in den Hubelementen oder am Stauraum erfolgen. Auf diese Weise ermöglicht die Hubeinheit ein vorzugsweise synchronisiertes Anheben und Absenken der innerhalb des Stauraums befindlichen abnehmbaren Segmente sowie optional eine Echtzeit-Bestandsaufnahme der Segmente. Das Bewegen der abnehmbaren Segmente in Richtung des Rotorelements erfolgt insbesondere durch Anheben der abnehmbaren Segmente. Führendes Anhebeelement kann hierbei das unterste Segment sein, das fest mit dem Hubelement verbunden ist und alle weiteren z.B. mittels Loslager gelagerten Segmente anhebt. Analog können die Hubelemente beziehungsweise die Hubeinheit auch zur Überführung von dem Betriebszustand in den Lagerzustand eingerichtet sein, indem die Hubeinheit beziehungsweise die Hubelemente die abnehmbaren Segmente nach dem Lösen von deren Befestigung am Rotorelement in den Stauraum absenken. Beispielsweise weist die Hubeinheit vier Hubelemente auf. Die Anzahl der Hubelemente kann nach Bedarf größer oder kleiner ausfallen..

Die Hubelemente können an zwei oder mehr unterschiedlichen Stellen inner- oder außerhalb des Stauraums angeordnet sein. Alternativ können jeweils ein oder mehrere der Hubelemente an jeweils gegenüberliegenden Seitenwänden des Segments angeordnet sein. Dies ist jedoch rein beispielhaft zu verstehen, selbstverständlich ist jede sinnvolle Anordnung von Hubelementen möglich. Beispielsweise bildet die Hubeinheit eine zumindest vertikal verschiebbare Lagerebene, auf welcher die abnehmbaren Segmente verstaubar sind. Eine dadurch ausführbare vertikale Bewegung kann zusätzlich durch eine oder mehrere horizontale und/oder vertikale Bewegungen (gegebenenfalls auch kombiniert) ergänzt werden. Das Überführen in den Betriebszustand erfolgt dann indem alle auf der Hubeinheit befindlichen abnehmbaren Segmente angehoben und gegebenenfalls zusätzlich horizontal, insbesondere radial, bewegt werden. Insgesamt ist hierdurch eine besonders einfache Bewegbarkeit der abnehmbaren Segmente gewährleistet.

Gemäß einer Weiterbildung ist vorgesehen, dass das Rotorelement parallel zu seiner Rotationsachse, insbesondere in vertikaler Richtung, unbeweglich relativ zu dem Stauraum ist. Mit anderen Worten kann das Rotorelement, insbesondere in vertikaler Richtung, unbeweglich relativ zu dem Stauraum sein. Es kann abweichend jedoch vorgesehen sein, dass die Basis einen hydraulischen Ausgleichsmechanismus aufweist, der den Landebereich auch bei Bewegungen der Basis (etwa durch Seegang auf einem Schiff) in der Waagerechten hält. Es kann beispielsweise auch vorgesehen sein, den Landebereich auf feste Abstützungen (am Installationsort) abzulassen, um Lasten abzuleiten. Es ist in dies keine Bewegung des Rotorelements parallel zu seiner Rotationsachse, also insbesondere in vertikaler Richtung, möglich. Auf diese Weise ergibt sich eine besonders einfache Gestaltung des Rotorelements.

Gemäß einer Weiterbildung ist vorgesehen, dass die Befestigungseinheit am Rotorelement zumindest eine Tasche zur Aufnahme der abnehmbaren Segmente aufweist. Mit anderen Worten kann das Rotorelement gemäß zumindest einer Tasche geformt sein, wobei eine jeweilige Öffnung der Tasche oder der Taschen vorzugsweise in radialer Richtung bezüglich der Rotationsachse nach außen zeigt. Die zumindest eine Tasche ist zur Aufnahme der abnehmbaren Segmente ausgebildet. Dabei kann vorgesehen sein, dass für jedes der abnehmbaren Segmente eine jeweilige Tasche vorgesehen ist oder dass eine Tasche zur Aufnahme mehrerer abnehmbarer Segmente ausgebildet ist. Durch die Aufnahme der abnehmbaren Segmente in die Tasche kann die abnehmbare Befestigung der abnehmbaren Segmente am Rotorelement zumindest teilweise bereitgestellt werden. Dies bedeutet insbesondere, dass zusätzlich zu der Tasche noch weitere Befestigungsmittel vorgesehen sein können. Die Tasche kann durch ihre Funktion als Teil der Befestigungseinheit aufgefasst werden. Durch eine solche Tasche zum Einschieben ergibt sich eine besonders einfache und stabile Gestaltung der Befestigungseinheit.

Gemäß einer Weiterbildung ist vorgesehen, dass die Segmente jeweilige Arretierungsmittel aufweisen, um die mehreren Segmente in dem Betriebszustand untereinander lösbar zu verbinden. Mit anderen Worten können die Segmente in dem Betriebszustand eine Verbindung untereinander aufweisen. Insbesondere sind Arretierungsmittel an parallel verlaufenden Seitenwänden zweier benachbarter abnehmbarer Segmente vorgesehen. Auf diese Weise können die entsprechenden Segmente zur Erhöhung der Stabilität des Landebereichs miteinander verbunden werden. Besonders bevorzugt ist vorgesehen, dass entsprechende Arretierungsmittel in Umfangsrichtung umlaufend an jeder Grenzfläche zwischen zwei Segmenten vorgesehen sind. Dabei können die Arretierungsmittel jeweils denselben Abstand von der Rotationsachse aufweisen. Es können auch mehrere solcher Befestigungsringe in unterschiedlichen Abständen beziehungsweise unterschiedlichen Radius um die Rotationsachse vorgesehen sein. Auf diese Weise ergibt sich eine besonders vorteilhafte Stabilität der Segmente beziehungsweise des Landebereichs. Außerdem kann die Befestigung der abnehmbaren Segmente am Rotorelement entlastet werden.

Gemäß einer Weiterbildung ist vorgesehen, dass genau eines der mehreren Segmente fest an dem Rotorelement angeordnet ist. Dieses genau eine fest am Rotorelement angeordnete Segment kann als Startpunkt für das Befestigen der abnehmbaren Segmente bei der Überführung in den Betriebszustand dienen. Insbesondere kann bei dem Überführen in den Betriebszustand das Befestigen der mehreren Segmente nacheinander beginnend bei einem zu dem festen Segment benachbarten abnehmbaren Segment vorgesehen sein. Dadurch ergibt sich eine verbesserte Stabilität sowohl währen der Überführung in den Betriebszustand als auch während der Betriebszustand bereits eingenommen ist, da das feste Segment mit höherer Stabilität an der Rotoreinheit angeordnet sein kann.

Gemäß einer Weiterbildung ist vorgesehen, dass das fest an dem Rotorelement angeordnete Segment größer als die abnehmbaren Segmente ausgeführt ist und/oder dazu ausgebildet ist, den Stauraum, insbesondere wasserdicht, abzudecken. Mit anderen Worten dient das feste an dem Rotorelement angeordnete Segment dann als Deckel beziehungsweise Abdeckung des Stauraums in dem Lagerzustand. Die übrigen, abnehmbaren Segmente können hierdurch vor Witterungseinflüssen geschützt werden.

Gemäß einer Weiterbildung ist vorgesehen, dass an der Basis Stützarme angeordnet sind, um den Landebereich abzustützen. Vorteilhafterweise können die Stützarme jeweils schwenkbar beziehungsweise rotierbar an der Basis angeordnet sein. Insbesondere weisen die Stützarme hierbei eine jeweilige Rotationsachse auf, die zumindest im Wesentlichen parallel zu der Rotationsachse des Rotorelements ist. Insbesondere ist die jeweilige Rotationsachse der Stützarme zwischen dem jeweiligen Stützarm und der Basis vorgesehen. Auf diese Weise kann das Bewegen der Stützarme sichergestellt sein. Alternativ oder zusätzlich zu dem Rotieren um die Rotationsachse können die Stützarme eine Längenveränderung als Freiheitsgrad aufweisen. Beispielsweise weisen die Stützarme hierzu einen Teleskopauszug beziehungsweise einen Teleskopmechanismus zum Verändern ihrer Länge auf. In diesem Fall können die Stützarme auch als Teleskoparms bezeichnet werden. Insbesondere ist vorgesehen, dass in dem Betriebszustand die Stützarme von der Basis abgespreizt sind. Alternativ oder zusätzlich kann vorgesehen sein, dass in dem Betriebszustand die Stützarme auf eine größere Länge ausgefahren sind, als im Lagerzustand. Beispielsweise kann vorgesehen sein, dass in dem Lagerzustand die Stützarme bestimmungsgemäß in eine platzsparende Haltung überführt sind. Dies kann durch Schwenken und/oder Einfahren der Stützarme erfolgen. Es kann beispielsweise vorgesehen sein, dass die Stützarme dazu ausgebildet sind, in dem Lagerzustand in den Stauraum zu schwenken. Auf diese Weise können die Stützarme oder zumindest ein Teil der Stützarme in dem Stauraum verstaubar sein. Durch die Stützarme ist eine zusätzliche Stabilität der Landebereichsanordnung beziehungsweise des Landebereichs gewährleistet. Außerdem kann durch ein höheres Maß an Stabilität und daraus resultierender verringerter Materialstärken Gewicht gespart werden.

Gemäß einer Weiterbildung ist vorgesehen, dass die Stützarme an ihrem der Basis abgewandtem Ende ein vertikal ausfahrbares Stützelement aufweisen. Die Stützarme sind vorteilhafterweise zumindest im Wesentlichen länglich ausgeführt, wobei ein jeweiliger Stützarm mit seinem einen Ende an der Basis angeordnet ist und das jeweils andere Ende das der Basis abgewandte Ende ist. Das vertikal ausfahrbare Stützelement ist dazu ausgebildet, schräg oder vertikal nach oben zu fahren, um in dem Betriebszustand eine Stützkraft auf einzelne der Segmente und/oder den Landebereich auszuüben oder auf sonstige Weise einen Höhenunterschied auszugleichen. Im Wesentlichen können die Stützarme sowie die vertikal ausfahrbaren Stützelemente analog zu den ausfahrbaren und/oder ausklappbaren Stützen eines Autokrans ausgeführt sein. Dabei sind entsprechende Stützarme jedoch so zu modifizieren, dass diese ihre Stützkraft nicht nach unten sondern nach oben entfalten können. Dies kann dadurch erzielt werden, dass die jeweiligen vertikal ausfahrbaren Stützelemente nach oben ausfahrbar sind (und nicht wie im Beispiel des Autokrans nach unten). Insgesamt ergeben die ausfahrbaren Stützarme eine einfache Möglichkeit, den die Segmente beziehungsweise den Landebereich dort zu stützen, wo dies nicht über den Untergrund oder Installationsort (Gebäude, Rumpf eines Schiffes etc.) möglich ist. Außerdem ist es vorteilhaft, dass sowohl das Ausfahren der Stützarme als auch das Ausfahren der vertikal ausfahrbaren Stützelemente hydraulisch betreibbar sein kann. In diesem Fall ergeben sich Synergien bei der Bereitstellung des hydraulischen Antriebs. Alternativ ist es jedoch auch möglich, die Stützarme und/oder die vertikal ausfahrbaren Stützelemente elektromotorisch oder auf beliebige andere Weise zu betreiben.

Gemäß einer Weiterbildung ist vorgesehen, dass zumindest einer der Stützarme in dem Lagerzustand eine Seitenfläche des Stauraums bildet und/oder diese, insbesondere wasserdicht, abdichtet. Mit anderen Worten kann vorgesehen sein, dass in dem Lagerzustand die entsprechende Seitenfläche des Stauraums durch ein oder mehrere der Stützarme bereitgestellt und/oder abgedichtet ist. Auf diese Weise kann einerseits eine hohe Beweglichkeit der Stützarme gewährleistet sein und andererseits eine hohe Effizienz der Landebereichsanordnung insbesondere hinsichtlich Leichtbau gewährleistet werden. Zudem ist gewährleistet, dass das Innere des Stauraums vor Witterungseinflüssen geschützt ist.

Gemäß einer Weiterbildung ist vorgesehen, dass die mehreren Segmente zumindest im Wesentlichen gemäß eines Kreissektors oder eines Dreiecks geformt sind. Auf diese Weise ergeben sich ein kreisrunder und/oder ein n-eckiger Landebereich, wobei n die Anzahl der Segmente darstellen kann. Dabei kann die Form der Segmente im Bereich, in dem diese an das Rotorelement angeordnet sind, von der genannten Form leicht abweichen. Dies ist darin begründet, dass in diesem Bereich die Formgebung an das Erfordernis der Befestigbarkeit am Rotorelement angepasst ist. Es ist jedoch auch jede andere Formgebung der Segmente denkbar. Vorteilhafterweise sind die mehreren Segmente jedoch so geformt, dass sich eine möglichst homogene Fläche als der Landebereich ergibt.

Ein zweiter Aspekt der Erfindung betrifft ein Verfahren zum Betreiben einer Landebereichsanordnung mit den folgenden Schritten zum Überführen der Landebereichsanordnung von einem Lagerzustand in einen Betriebszustand:
- Bewegen mehrerer in einem Stauraum der Landebereichsanordnung gelagerter, abnehmbarer Segmente in Richtung eines Rotorelements der Landebereichsanordnung mittels einer Hubeinheit, welche eines oder mehrere in oder an dem Stauraum angeordnete Hubelemente aufweist,
- Befestigen mehrerer in dem Stauraum der Landebereichsanordnung gelagerter, abnehmbarer Segmente an dem Rotorelement der Landebereichsanordnung, und
- Auffächern der mehreren Segmente durch Rotieren des Rotorelements,
und/oder mit den folgenden Schritten zum Überführen der Landebereichsanordnung von dem Betriebszustand in den Lagerzustand:
- Zusammenfächern der mehreren Segmente durch Rotieren des Rotorelements, und
- Lösen der Befestigung der abnehmbaren Segmente und anschließendes Verlagern der Segmente mittels der Hubeinheit in den Stauraum der Landebereichsanordnung.

Dabei ist das Verfahren insbesondere auf die beanspruchte Landebereichsanordnung, welche im Rahmen der gesamten Anmeldung beschrieben ist, zu verstehen. Dementsprechend gelten Merkmale sowie deren Vorteile auf analoge Weise auch für das Verfahren. Dasselbe gilt analog auch umgekehrt, Merkmale sowie Vorteile welche in Bezug auf das Verfahren beschrieben sind, gelten dementsprechend auch für die erfindungsgemäße Landebereichsanordnung.

Gemäß einer Weiterbildung ist vorgesehen, dass das Befestigen der mehreren Segmente jeweils einzeln nacheinander erfolgt und das Rotorelement vor dem Befestigen eines nachfolgend zu befestigenden Segments um einen vorbestimmten Winkel rotiert wird. Mit anderen Worten können die Schritte des Befestigens und des Auffächerns jeweils iterierend beziehungsweise abwechselnd durchgeführt werden. Nach dem Befestigen eines der abnehmbaren Segmente am Rotorelement erfolgt das Auffächern durch das Rotieren um den vorbestimmten Winkel, bevor das nächste Segment befestigt wird. Dieses iterierende beziehungsweise abwechselnde Durchführen der Verfahrensschritte des Befestigens und Auffächerns kann solange durchgeführt werden, bis alle abnehmbaren Segmente an dem Rotorelement befestigt sind. Bei dem Überführen der Landebereichsanordnung in den Lagerzustand gilt dies auf analoge Weise umgekehrt. In diesem Fall kann die Befestigung der abnehmbaren Segmente jeweils nacheinander einzeln erfolgen, wobei zwischen dem Lösen der Befestigung zweier benachbarter Segmente ein Rotieren um den vorbestimmten Winkel erfolgt. Dabei kann das Rotieren bei dem Überführen in den Lagerzustand gleichläufig oder gegenläufig gegenüber dem Überführen in den Betriebszustand erfolgen.

Die Landebereichsanordnung kann eine Steuereinheit aufweisen, welche das Befestigen und das Auffächern und/oder das Zusammenfächern sowie das Lösen der Befestigung steuert. Dementsprechend kann die Steuereinheit dazu ausgebildet sein, das jeweils nacheinander erfolgende Befestigen der mehreren Segmente zu kommandieren. Alternativ oder zusätzlich kann die Steuereinheit kommandieren, dass vor dem Befestigen des nachfolgend zu befestigenden Segments das Rotorelement um den vorbestimmten Winkel rotiert wird. Mit anderen Worten kann die Steuereinheit derart ausgebildet sein, dass diese das abwechselnde Rotieren beziehungsweise Auffächern beziehungsweise Befestigen der Segmente, insbesondere im oben genannten Sinne, steuert. Auf analoge Weise kann die Steuereinheit dazu ausgebildet sein, das Zusammenfächern sowie das Lösen der Befestigung abwechselnd beziehungsweise iterierend zu steuern.

Die Steuereinheit kann mechanisch oder bevorzugt elektronisch ausgeführt sein. Beispielsweise kann die Steuereinheit als Mikroprozessor, programmierbares Logikgatter (FPGA) oder als digitaler Signalprozessor ausgeführt sein. Dementsprechend kann die Landebereichsanordnung eine analoge oder digitale Steuereinheit umfassen, die dazu ausgebildet ist, das erfindungsgemäße Verfahren durchzuführen beziehungsweise zu steuern. Im Falle einer digitalen Steuereinheit kann diese einen Speicher aufweisen, auf dem ein ausführbarer Programmcode gespeichert ist, der bei Ausführung des Programmcodes in der Steuereinheit die Durchführung der entsprechenden Verfahrensschritte zur Folge hat.

Es zeigen:
- Fig. 1: eine Landebereichsanordnung für, insbesondere senkrechtstartfähige, Luftfahrzeuge mit mehreren Segmenten, welche in einem Lagerzustand in einem Stauraum verstaut sind, in einer schematischen Schnittansicht;
- Fig. 2: dieselbe Landebereichsanordnung im Lagerzustand in einer schematischen Draufsicht;
- Fig. 3: in einer schematischen Perspektivansicht mehrere Schritte zum Überführen der Landebereichsanordnung in einen Betriebszustand;
- Fig. 4: nochmals die Landebereichsanordnung in dem Lagerzustand in einer schematischen Draufsicht;
- Fig. 5: die Landebereichsanordnung in einer schematischen Perspektivansicht auf deren Unterseite in einer schematischen Perspektivansicht;
- Fig. 6: eine beispielhaft auf einem Schiff installierte Landebereichsanordnung in dem Lagerzustand in einer schematischen Perspektivansicht; und
- Fig. 7: die beispielhaft auf einem Schiff installierte Landebereichsanordnung in dem Betriebszustand in einer schematischen Perspektivansicht.

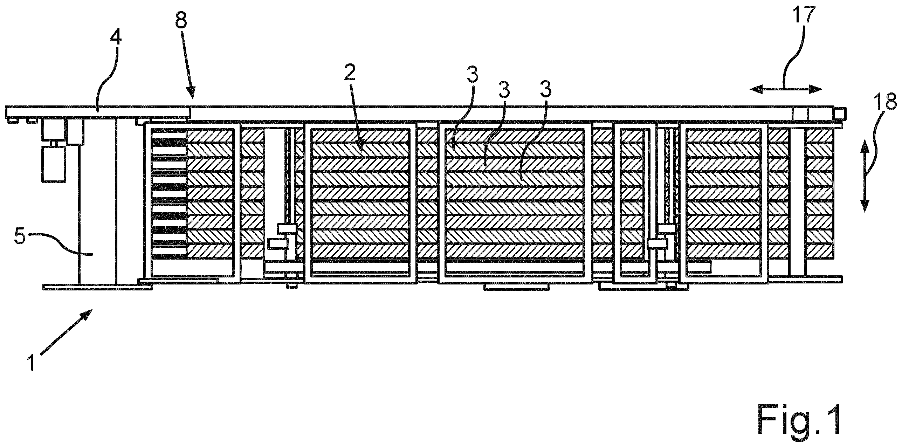

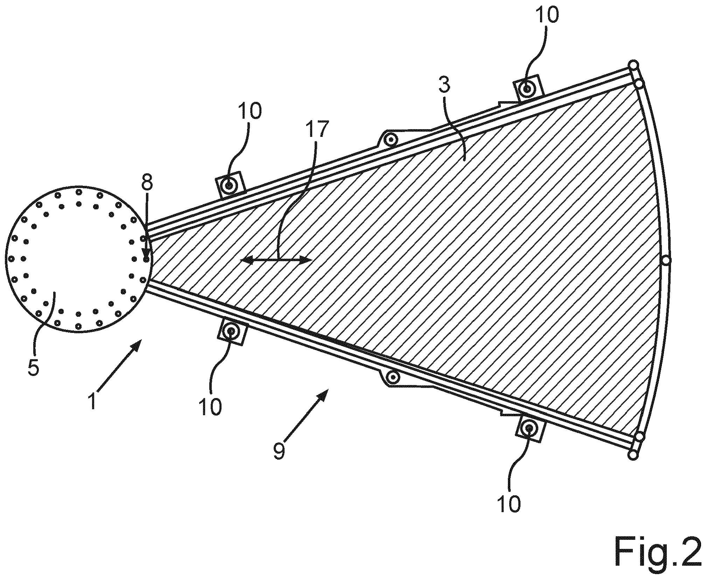

Die Fig. 1 und 2 zeigen eine Landebereichsanordnung 1 zum Bereitstellen eines Landebereichs 11 für Luftfahrzeuge 19, insbesondere senkrechtstartfähige Luftfahrzeuge19. Bei dem Landebereich 11 handelt es sich insbesondere um eine zumindest im Wesentlichen ebene Fläche, welche die Landung des Lagerzustands ermöglicht. Insbesondere ist die Landebereichsanordnung 1 beziehungsweise der Landebereich 11 hinsichtlich Größe und/oder Tragfähigkeit dazu ausgebildet, einen Hubschrauber tragen zu können. Mit anderen Worten ist die Landebereichsanordnung 1 beziehungsweise der Landebereich 11 dazu ausgebildet, das Landen eines Hubschraubers auf dem Landebereich 11 zu ermöglichen.

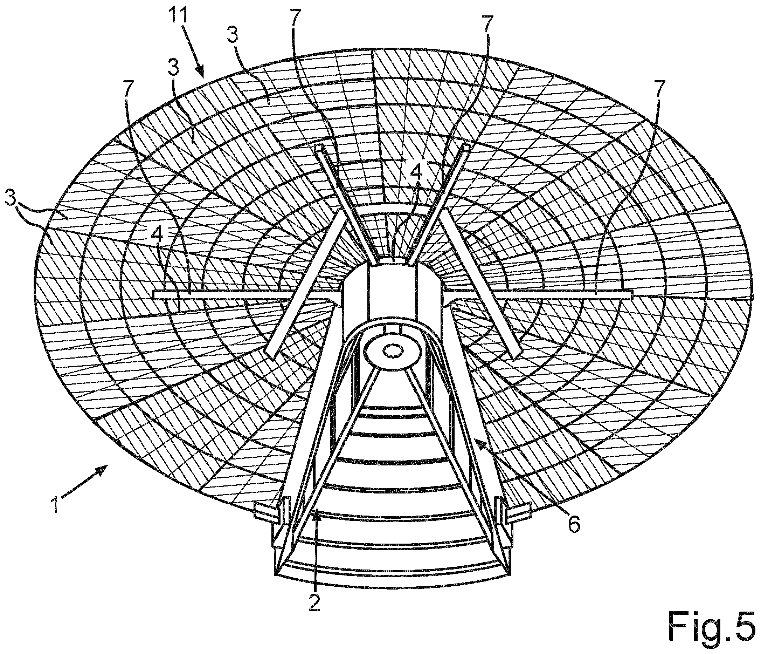

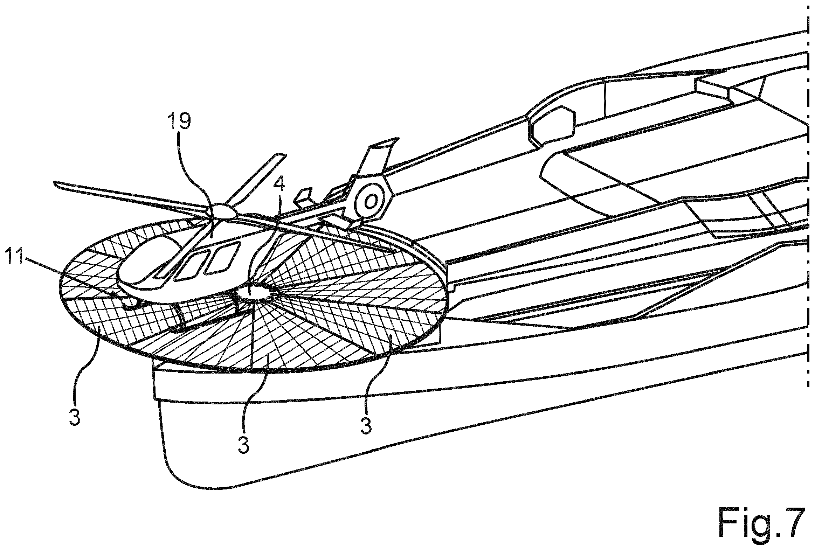

Um eine platzsparende Anordnung beziehungsweise Installation der Landebereichsanordnung 1 an einem Installationsort, beispielsweise einem Schiff, einer schwimmenden Plattform (beispielsweise einer Bohrinsel), einem Gebäude oder dergleichen zu ermöglichen, ist vorgesehen, dass die Landebereichsanordnung 1 einen Betriebszustand und einen Lagerzustand aufweist. Dabei ist ein Platzbedarf der Landebereichsanordnung 1 in dem Lagerzustand verglichen mit dem Betriebszustand deutlich verringert. Hierzu ist die Landebereichsanordnung 1 beziehungsweise der Landebereich 11 in mehrere Segmente 3 unterteilt. Mit anderen Worten bilden die Segmente 3 in dem Betriebszustand der Landebereichsanordnung 1 den Landebereich 11. Mit nochmals anderen Worten sind die einzelnen Segmente 3 in dem Betriebszustand zu einer zumindest im Wesentlichen ebenen Fläche zusammengesetzt, wobei diese Fläche den Landebereich 11 ausbildet. Der Landebereich 11 ist beispielsweise anhand der Fig. 5 und 7 zu erkennen.

Nun wieder Bezug nehmend auf die Fig. 1 und 2 sind die Segmente 3 in dem Lagerzustand zumindest teilweise in einem Stauraum 2 der Landebereichsanordnung 1 verstaubar. Insbesondere sind die mehreren Segmente 3 in dem Lagerzustand bestimmungsgemäß in dem Stauraum 2 verstaut beziehungsweise angeordnet. Dies ist insbesondere anhand von Fig. 1 zu erkennen. Der Stauraum 2 ist seitlich durch jeweilige Seitenflächen 6 begrenzt.

Diese mehreren Segmente 3 können untereinander gleichartig oder unterschiedlich ausgebildet sein. In anderen Ausführungsbeispielen kann beispielsweise vorgesehen sein, dass alle der mehreren Segmente 3 gleich sind. Vorliegend ist vorgesehen, dass sich eines der mehreren Segmente 3 von den übrigen, gleichartigen Segmenten 3 unterscheidet. Dies wird im Folgenden noch weiter ausgeführt.

An einer Basis 5 der Landebereichsanordnung 1 ist ein Rotorelement 4 angeordnet. Das Rotorelement 4 ist drehbar an der Basis 5 angeordnet. Hierfür kann das Rotorelement 4 einen Elektromotor, Hydraulikantrieb oder beliebigen anderen Antrieb aufweisen. Dabei weist das Rotorelement 4 vorliegend eine vertikal ausgerichtete Rotationsachse auf. Mit anderen Worten kann das Rotorelement 4 innerhalb einer horizontalen Ebene rotieren. Insbesondere kann das Rotorelement 4 innerhalb der Ebene rotieren, welche in dem Betriebszustand der Landebereichsanordnung 1 durch den Landebereich 11 aufgespannt wird. Das Rotorelement 4 ist dazu ausgebildet, die mehreren Segmente 3 in den Betriebszustand und/oder in den Lagerzustand zu überführen. Hierzu bewegt das Rotorelement 4 die entsprechenden Segmente 3 mit seiner Rotationsbewegung.

Die Landebereichsanordnung 1 weist eine Befestigungseinheit 8 auf, welche dazu ausgebildet ist, die Segmente 3 an dem Rotorelement 4 zu befestigen und/oder die Befestigung zu lösen. Insbesondere ist die Befestigungseinheit 8 dazu ausgebildet, die Segmente 3 bei der Überführung in den Betriebszustand an dem Rotorelement 4 zu befestigen und bei der Überführung in den Lagerzustand diese Befestigung zu lösen. Mit anderen Worten sind zumindest einzelne der mehreren Segmente 3 abnehmbar an dem Rotorelement 4 befestigt. Mit anderen Worten sind die zumindest einzelnen der mehreren Segmente 3 reversibel an dem Rotorelement 4 befestigbar. Diese Segmente 3 werden auch als abnehmbare Segmente 3 bezeichnet. In anderen Ausführungsformen kann vorgesehen sein, dass alle der Segmente 3 abnehmbar sind. Im vorliegenden Ausführungsbeispiel ist vorgesehen, dass eines der mehreren Segmente 3 fest an dem Rotorelement 4 angeordnet ist und die übrigen Segmente 3 abnehmbar ausgeführt sind. Dabei sind vorliegend bevorzugterweise die abnehmbaren Segmente 3 untereinander jeweils gleich ausgeführt. Auf diese Weise sind diese besonders leicht austauschbar und/oder ersetzbar. Das einzige Segment aus den mehreren Segmenten 3, welches von den übrigen Segmenten 3 abweicht, ist insbesondere das fest am Rotorelement 4 angeordnete Segment (siehe weiter unten das Decksegment 16). Dieses abweichende Segment 3 kann insbesondere größer als die abnehmbaren Segmente ausgeführt sein. Vorzugsweise ist das fest an dem Rotorelement 4 angeordnete Segment 3 dazu ausgebildet, den Stauraum 2 abzudecken.

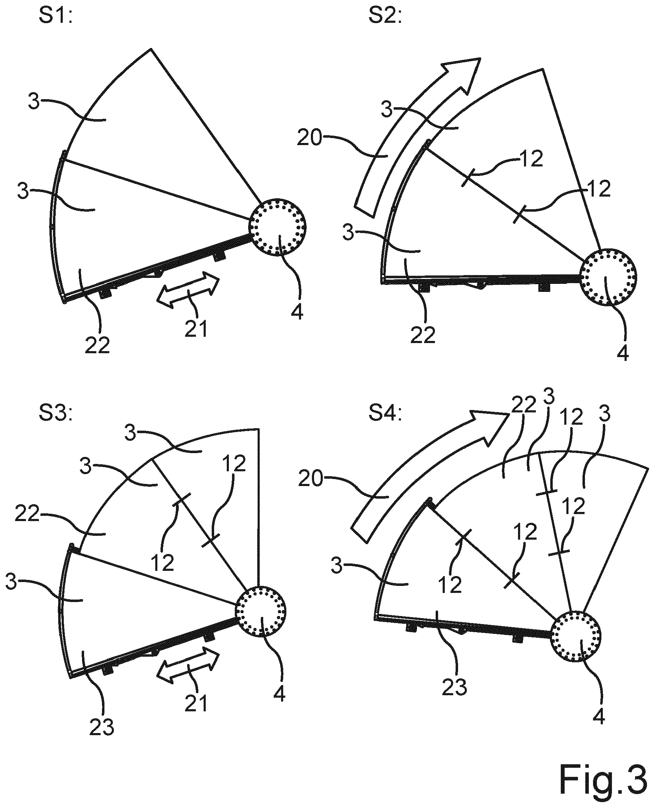

Die Fig. 3 zeigt nun anhand mehrerer Schritte S1 bis S4 auszugsweise das Überführen der Landebereichsanordnung 1 von dem Lagerzustand in den Betriebszustand.

In dem Schritt S1 wird ein Segment 22 an dem Rotorelement 4 abnehmbar befestigt. Dies erfolgt im vorliegenden Beispiel insbesondere über eine entsprechende Tasche beziehungsweise Ausnehmung, die das Rotorelement 4 für die abnehmbaren Segmente 3 aufweist. Diese Tasche beziehungsweise Ausnehmung ist somit im vorliegenden Beispiel Teil der Befestigungseinheit 8. Entsprechend einer Einhängbewegung 21, welche insbesondere innerhalb der durch den Landebereich 11 aufgespannten Ebene erfolgt, wird das Segment 22 in diese Tasche beziehungsweise Ausnehmung eingehängt beziehungsweise eingeführt. Anschließend kann eine weitere Fixierung des Segments 22 durch entsprechende Befestigungselemente der Befestigungseinheit 8 erfolgen. Diese Befestigungselemente können an dem Rotorelement 4 und/oder dem jeweiligen Segment 3 beziehungsweise 22 angeordnet sein.

Nach dem Befestigen des Segments 22 am Rotorelement 4 in dem Schritt S1 wird das Rotorelement 4 im nachfolgenden Schritt S2 um einen vorbestimmten Winkel rotiert. Dies ist in der Fig. 3 durch einen Pfeil 20 kenntlich gemacht. Zudem wird in dem Schritt S2 das Segment 22 an dem benachbarten Segment 3 arretiert. Hierzu weisen die Segmente 3 jeweilige Arretierungsmittel 12 auf. Somit ist eine besonders stabile Befestigung jedes der Segmente 3 beziehungsweise im vorliegenden Beispiel konkret des Segments 22 gewährleistet. Der vorbestimmte Winkel, um welchen die Rotation 20 erfolgt, entspricht insbesondere einem durch das Segment 22 beziehungsweise durch die jeweiligen Segmente 3 abgedeckten Winkelbereich. Sinn und Zweck der Rotation 20 ist es, dass anschließend ein nachfolgendes Segment 23 an dem Rotorelement 4 befestigt werden kann. Dies erfolgt im nachfolgenden Schritt S3. Durch eine Hubeinheit 9, welche im vorliegenden Beispiel vier Hubelemente 10 umfasst, wird das nachfolgende Segment 23 aus dem Stauraum z.B. entlang einer vertikalen Bewegungsrichtung 18 heraus angehoben (siehe auch Fig. 1 und 2). Die Hubeinheit 9 beziehungsweise deren Hubelemente 10 können beispielsweise einen Elektroantriebs, insbesondere Elektromotors, einen Hydraulikantriebs oder einen beliebigen anderen Antrieb bzw. Aktor aufweisen. Die vier Hubelemente 10 sind dazu ausgebildet, die im Stauraum gelagerten Segmente 3 gemeinsam, synchronisiert anzuheben. Anschließend kann auch das nachfolgende Segment 23 mit der Einhängbewegung 21 in horizontaler bzw. radialer Bewegungsrichtung 17 (siehe Fig. 1 und 2) in das Rotorelement 4 eingeschoben werden. Auch diese Bewegung in horizontaler Bewegungsrichtung 17 kann mittels der Hubeinheit 9 erfolgen. Die Befestigung kann analog zu der Befestigung des Segments 22 erfolgen. Alternativ kann das Segment 23 über die Hubelemente 10 befestigt sein und in der Position gehalten werden.

In einem anschließenden Schritt S4 erfolgt wiederum die Rotation 20 um den vorbestimmten Winkel. Analog zu dem Schritt S2 erfolgt in dem Schritt S4 das arretieren der Arretierungsmittel 12. mittels der Arretierungsmittel 12 wird das nachfolgende Segment 23 an dem Segment 22 befestigt beziehungsweise arretiert.

Durch das Rotieren 20 beziehungsweise das Auffächern mittels des Rotorelements 4 können die innerhalb des Stauraums 2 gestapelt verstauten beziehungsweise angeordneten Segmente 3 bei der Überführung in den Betriebszustand nebeneinander an dem Rotorelement 4 angeordnet werden. Dabei verfolgt das Rotieren 20 insbesondere den Zweck, eine Öffnung des Stauraums 2 nach oben hin für das Entnehmen des jeweils nachfolgenden Segments 3 zu öffnen. Auf diese Weise wird das Herausheben und Anordnen eines nachfolgenden Segments 3 ermöglicht.

Zur Steuerung dieser Verfahrensschritte kann an der Landebereichsanordnung 1 eine Steuereinheit 15 vorgesehen sein. Beispielsweise kann die Steuereinheit 15 dazu ausgebildet sein, das Befestigen und das Auffächern und/oder das Zusammenfächern sowie das Lösen der Befestigung steuert. Dementsprechend kann die Steuereinheit 15 dazu ausgebildet sein, das jeweils nacheinander erfolgende Befestigen der mehreren Segmente 3 zu kommandieren. Alternativ oder zusätzlich kann die Steuereinheit kommandieren, dass vor dem Befestigen des nachfolgend zu befestigenden Segments das Rotorelement um den vorbestimmten Winkel rotiert wird. Mit anderen Worten kann die Steuereinheit 15 derart ausgebildet sein, dass diese das abwechselnde Rotieren beziehungsweise Auffächern beziehungsweise Befestigen der Segmente 3, insbesondere im oben genannten Sinne, steuert. Auf analoge Weise kann die Steuereinheit 15 dazu ausgebildet sein, das Zusammenfächern sowie das Lösen der Befestigung abwechselnd beziehungsweise iterierend zu steuern.

Die Steuereinheit 15 kann mechanisch oder bevorzugt elektronisch ausgeführt sein. Beispielsweise kann die Steuereinheit 15 als Mikroprozessor, programmierbares Logikgatter (FPGA) oder als digitaler Signalprozessor ausgeführt sein. Dementsprechend kann die Landebereichsanordnung 1 eine analoge oder digitale Steuereinheit 15 umfassen, die dazu ausgebildet ist, das erfindungsgemäße Verfahren durchzuführen beziehungsweise zu steuern. Im Falle einer digitalen Steuereinheit 15 kann diese einen Speicher aufweisen, auf dem ein ausführbarer Programmcode gespeichert ist, der bei Ausführung des Programmcodes in der Steuereinheit 15 die Durchführung der entsprechenden Verfahrensschritte zur Folge hat.

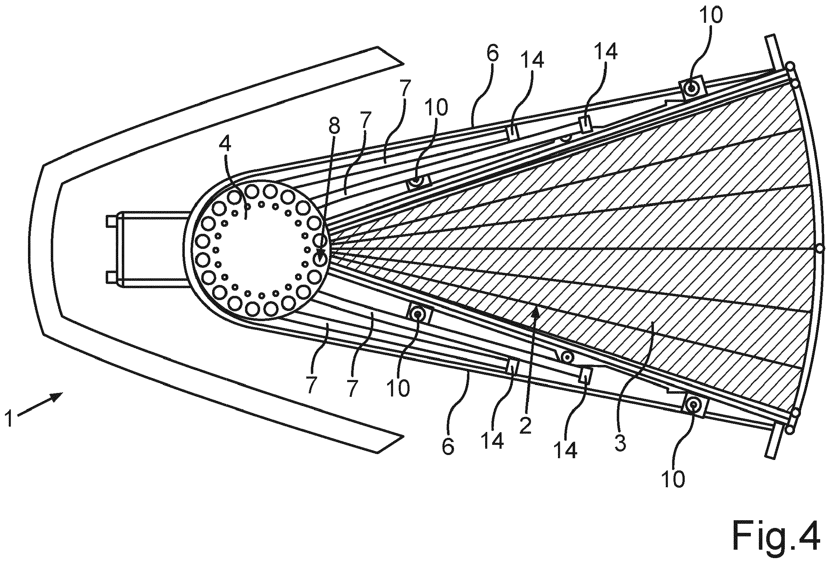

Fig. 4 zeigt zudem mehrere Stützarme 7 in dem Lagerzustand. Diese Stützarme 7 sind mit einem ersten Ende an der Basis 5 oder dem Rotorelement 4 angeordnet. An dem gegenüberliegenden Ende weisen die Stützarme 7 ein jeweiliges vertikal ausfahrbares Stützelement 14 auf. Die Stützarme 7 sind insbesondere schwenkbar an der Basis 5 angeordnet. In dem Lagerzustand können die Stützarme 7 (ebenso wie die Segmente 3) innerhalb des Stauraums 2 verstaut sein.

Fig. 5 zeigt die Landebereichsanordnung 1 in dem Betriebszustand. Auf der Oberseite der Landebereichsanordnung 1 befindet sich der Landebereich 11. In Fig. 5 ist durch die nach oben gerichtete Perspektive zu erkennen, wie der Landebereich 11 beziehungsweise Segmente 3 von unten durch die Stützarme 7 abgestützt werden. Mit anderen Worten sind die Stützarme 7 dazu ausgebildet, den Landebereich 11 beziehungsweise einzelne Segmente 3 von unten abzustützen. Hierzu können die Stützarme 7 geschwenkt werden, sodass diese in eine jeweilige Betriebsposition überführt werden. Beispielsweise nehmen die Stützarme 7 in dem Betriebszustand ihre jeweilige Betriebsposition ein, in welcher die jeweiligen Stützarme 7 von der Basis 5 beziehungsweise dem Rotorelement 4 abgespreizt sind. Dabei können die Stützarme 7 in ihrer Haupterstreckungsrichtung in radialer Richtung bezogen auf das Rotorelement 4 beziehungsweise die Basis 5 verlaufen. Zusätzlich zu dem Schwenken der Stützarme 7 kann vorgesehen sein, dass diese ihre jeweilige Länge verändern. Beispielweise können die Stützarme 7 als Teleskoparme ausgeführt sein. In diesem Fall können die Stützarme 7 in dem Betriebszustand ihre Länge gegenüber dem Lagerzustand vergrößern. Auf diese Weise ist eine noch effizientere Abstützung des Landebereichs 11 in einer radial weiter außen liegenden Position möglich. Beispielsweise ist das jeweilige ausfahrbare Stützelement 14 an dem jeweiligen der Basis 5 abgewandten Ende in dem Betriebszustand derart ausgefahren, dass ein vorbestimmter Druck auf die Unterseite des Landebereichs 11 beziehungsweise auf die Unterseite von einem oder mehreren Segmenten 3 erzeugt wird. Dieser Druck ist nach oben gerichtet und erzeugt die Stützkraft.

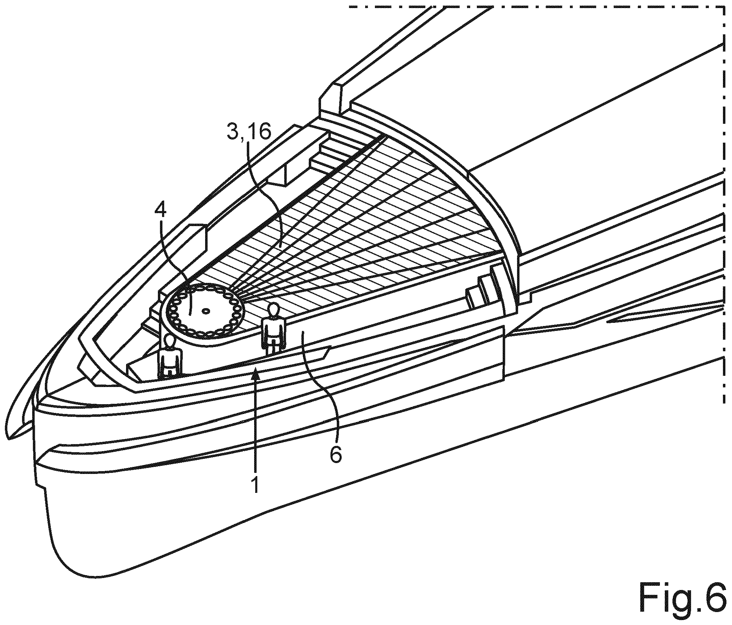

Zuletzt zeigen die Fig. 6 und 7 eine beispielhafte Anordnung der Landebereichsanordnung 1 mit einem Schiff als beispielhaftem Installationsort. Dabei zeigt Fig. 6 die Landebereichsanordnung 1 in dem Lagerzustand und Fig. 7 die Landebereichsanordnung 1 in dem Betriebszustand. Wie Fig. 7 weiterhin zeigt, ist eine Oberfläche des Rotorelements 4 ebenfalls Teil des Landebereichs. Mit anderen Worten kann die Oberfläche des Rotorelements 4 ebenfalls, zusätzlich zu den Segmenten 3, zu dem Landebereich 11 beitragen.

Anhand von Fig. 6 gut erkennbar ist, dass eines der Segmente 3 größer ist als die übrigen der Segmente 3. Dabei handelt es sich um das von den übrigen Segmenten 3 abweichende Segment, welches oben bereits beschrieben wurde. Dieses ist im vorliegenden Beispiel als Decksegment 16 ausgeführt. Das Decksegment 16 ist dazu ausgebildet, in dem Lagerzustand den Stauraum 2 nach oben hin, insbesondere wasserdicht, abzudichten. Hierzu legt das Decksegment 16 im vorliegenden Beispiel auf den Seitenflächen 6 auf, welche den Stauraum 2 seitlich begrenzen. Hierdurch ist eine besonders sichere Lagerung der innerhalb des Stauraums 2 angeordneten Segmente 3 gewährleistet. Durch die größeren Abmessungen des Decksegments 16 kann es sein, dass dieses eines oder mehrere im Betriebszustand angrenzende Segmente 3 überragt. In diesem Fall kann hier eine Stufe entstehen, welche in der Praxis jedoch vernachlässigbar ist.

### BEZUGSZEICHENLISTE:

- 1: Landebereichsanordnung
- 2: Stauraum
- 3: Segment
- 4: Rotorelement
- 5: Basis
- 6: Seitenfläche
- 7: Stützarm
- 8: Befestigungseinheit
- 9: Hubeinheit
- 10: Hubelement
- 11: Landebereich
- 12: Arretierungsmittel
- 14: Stützelement
- 15: Steuereinheit
- 16: Decksegment
- 17: horizontale Bewegungsrichtung
- 18: vertikale Bewegungsrichtung
- 19: Luftfahrzeug
- 20: Rotation
- 21: Einhängbewegung
- 22: Segment
- 23: Segment
- S1-S4: Verfahrensschritte

## Patentansprüche

1. Landebereichsanordnung (1) für, insbesondere senkrechtstartfähige, Luftfahrzeuge (19), mit
- mehreren Segmenten (3), welche in einem Betriebszustand zusammen einen Landebereich (11) ausbilden,
- einem Stauraum (2), in welchem die mehreren Segmente (3) in einem Lagerzustand zumindest teilweise verstaubar sind, und
- einer Basis (5) mit einem drehbaren Rotorelement (4), um die mehreren Segmente (3) zur Überführung in den Betriebszustand und/oder in den Lagerzustand zu rotieren,
**dadurch gekennzeichnet, dass**
- zumindest einzelne der mehreren Segmente (3) abnehmbar an dem Rotorelement (4) befestigt sind und eine Befestigungseinheit (8) der Landebereichsanordnung (1) dazu ausgebildet ist, die abnehmbaren Segmente (3) bei der Überführung in den Betriebszustand an dem Rotorelement (4) zu befestigen und bei der Überführung in den Lagerzustand diese Befestigung zu lösen, und
- die Landebereichsanordnung (1) weiter aufweist
eine Hubeinheit (9), welche eines oder mehrere in oder an dem Stauraum (2) angeordnete Hubelemente (10) aufweist, um die abnehmbaren Segmente (3) bei der Überführung in den Betriebszustand in Richtung des Rotorelements (4) zu bewegen.

2. Landebereichsanordnung (1) nach Anspruch 1,
**dadurch gekennzeichnet, dass**
das Rotorelement (4) parallel zu seiner Rotationsachse, insbesondere in vertikaler Richtung, unbeweglich relativ zu dem Stauraum (2) ist.

3. Landebereichsanordnung (1) nach einem der vorhergehenden Ansprüche,
**dadurch gekennzeichnet, dass**
die Befestigungseinheit (8) am Rotorelement (4) zumindest eine Tasche zur Aufnahme der abnehmbaren Segmente (3) aufweist.

4. Landebereichsanordnung (1) nach einem der vorhergehenden Ansprüche,
**dadurch gekennzeichnet, dass**
die Segmente jeweilige Arretierungsmittel (12) aufweisen, um die mehreren Segmente (3) in dem Betriebszustand untereinander lösbar zu verbinden.

5. Landebereichsanordnung (1) nach einem der vorhergehenden Ansprüche,
**dadurch gekennzeichnet, dass**
genau eines der mehreren Segmente (3) fest an dem Rotorelement (4) angeordnet ist.

6. Landebereichsanordnung (1) nach Anspruch 5,
**dadurch gekennzeichnet, dass**
das fest an dem Rotorelement (4) angeordnete Segment (3, 15) größer als die abnehmbaren Segmente (3) ausgeführt ist und dazu ausgebildet ist, den Stauraum (2), insbesondere wasserdicht, abzudecken.

7. Landebereichsanordnung (1) nach einem der vorhergehenden Ansprüche,
**dadurch gekennzeichnet, dass**
an der Basis (5) Stützarme (7) angeordnet sind, um den Landebereich (11) abzustützen.

8. Landebereichsanordnung (1) nach einem der vorhergehenden Ansprüche,
**dadurch gekennzeichnet, dass**
die Stützarme (7) an ihrem jeweiligen der Basis (5) abgewandtem Ende ein vertikal ausfahrbares Stützelement (14) aufweisen.

9. Landebereichsanordnung (1) nach einem der vorhergehenden Ansprüche,
**dadurch gekennzeichnet, dass**
zumindest einer der Stützarme (7) in dem Lagerzustand eine Seitenfläche (6) des Stauraums (2) bildet und/oder diese, insbesondere wasserdicht, abdichtet.

10. Landebereichsanordnung (1) nach einem der vorhergehenden Ansprüche,
**dadurch gekennzeichnet, dass**
die mehreren Segmente (3) zumindest im Wesentlichen gemäß eines Kreissektors oder eines Dreiecks geformt sind.

11. Verfahren zum Betreiben einer Landebereichsanordnung (1) mit den folgenden Schritten zum Überführen der Landebereichsanordnung (1) von einem Lagerzustand in einen Betriebszustand:
- Bewegen mehrerer in einem Stauraum (2) der Landebereichsanordnung (1) gelagerter, abnehmbarer Segmente (3) in Richtung eines Rotorelements (4) der Landebereichsanordnung (1) mittels einer Hubeinheit (9), welche eines oder mehrere in oder an dem Stauraum (2) angeordnete Hubelemente (10) aufweist,
- Befestigen der mehreren in dem Stauraum (2) der Landebereichsanordnung (1) gelagerten, abnehmbaren Segmente (3) an dem Rotorelement (4) der Landebereichsanordnung (1), und
- Auffächern der mehreren Segmente (3) durch Rotieren des Rotorelements (4),
und/oder mit den folgenden Schritten zum Überführen der Landebereichsanordnung (1) von dem Betriebszustand in den Lagerzustand:
- Zusammenfächern der mehreren Segmente (3) durch Rotieren des Rotorelements (4), und
- Lösen der Befestigung der abnehmbaren Segmente (3) und anschließendes Verlagern der Segmente (3) mittels der Hubeinheit (9) in den Stauraum der Landebereichsanordnung (1).

12. Verfahren nach Anspruch 11,
**dadurch gekennzeichnet, dass**
das Befestigen der mehreren Segmente (3) jeweils einzeln nacheinander erfolgt und das Rotorelement (4) vor dem Befestigen eines nachfolgend zu befestigenden Segments (3, 22) um einen vorbestimmten Winkel (20) rotiert wird.

## Claims

1. A landing zone arrangement (1) for aircraft (19), in particular capable of vertical takeoff, comprising
- multiple segments (3), which together form a landing zone (11) in an operating state,
- a storage space (2), in which the multiple segments (3) are at least partially stowable in a stored state, and
- a base (5) with a rotatable rotor element (4) to rotate the multiple segments (3) for transferring into the operating state and/or into the stored state,
**characterized in that**
- at least individual ones of the multiple segments (3) are removably attached to the rotor element (4) and a securing unit (8) of the landing zone arrangement (1) is formed to attach the removable segments (3) to the rotor element (4) in transferring into the operating state and to detach this attachment in transferring into the stored state, and
- the landing zone arrangement (1) further comprises
a lifting unit (9), which comprises one or more lifting elements (10 arranged in or at the storage space (2), to move the removable segments (3) towards the rotor element (4) in transferring into the operating state.

2. The landing zone arrangement (1) according to claim 1,
**characterized in that**
the rotor element (4) is immovable in relation to the storage space (2) parallel to its rotational axis, in particular in vertical direction.

3. The landing zone arrangement (1) according to any one of the preceding claims, **characterized in that**
the securing unit (8) comprises at least one pocket for receiving the removable segments (3) at the rotor element (4).

4. The landing zone arrangement (1) according to any one of the preceding claims, **characterized in that**
the segments comprise respective locking means (12) to detachably connect the multiple segments (3) to each other in the operating state.

5. The landing zone arrangement (1) according to one of the preceding claims,
**characterized in that**
exactly one of the multiple segments (3) is fixedly arranged at the rotor element (4).

6. The landing zone arrangement (1) according to claim 5,
**characterized in that**
the segment (3, 15) fixedly arranged at the rotor element (4) is designed larger than the removable segments (3) and is formed to cover the storage space (2), in particular in water-proof manner.

7. The landing zone arrangement (1) according to any one of the preceding claims, **characterized in that**
support arms (7) are arranged at the base (5) to support the landing zone (11).

8. The landing zone arrangement (1) according to any one of the preceding claims, **characterized in that**
the support arms (7) comprise a vertically extendable support element (14) at their respective end facing away from the base (5).

9. The landing zone arrangement (1) according to any one of the preceding claims, **characterized in that**
at least one of the support arms (7) forms a lateral surface (6) of the storage space (2) and/or seals it, in particular in water-proof manner.

10. The landing zone arrangement (1) according to any one of the preceding claims, **characterized in that**
the multiple segments (3) are at least substantially shaped according to a circular sector or a triangle.

11. A method for operating a landing zone arrangement (1) with the following steps for transferring the landing zone arrangement (1) from a stored state into an operating state:
- moving multiple removable segments (3) stored in a storage space (2) of the landing zone arrangement (1) towards a rotor element (4) of the landing zone arrangement (1) by means of a lifting unit (9), which comprises one or more lifting elements (10) arranged in or at the storage space (2),
- attaching the multiple removable segments (3) stored in the storage space (2) of the landing zone arrangement (1) to the rotor element (4) of the landing zone arrangement (1), and
- expanding the multiple segments (3) by rotating the rotor element (4),
and/or with the following steps for transferring the landing zone arrangement (1) from the operating state into the stored state:
- collapsing the multiple segments (3) by rotating the rotor element (4), and
- detaching the attachment of the removable segments (3) and subsequent displacement of the segments (3) by means of the lifting unit (9) into the storage space of the landing zone arrangement (1).

12. The method according to claim 11,
**characterized in that**
the attachment of the multiple segments (3) is each individually effected one after the other and the rotor element (4) is rotated by a predetermined angle (20) before attaching a segment (3, 22) to be subsequently attached.

## Revendications

1. Agencement (1) d'aire d'atterrissage pour des aéronefs (19), en particulier à décollage vertical, comprenant
- plusieurs segments (3) qui, dans un état de fonctionnement, forment ensemble une aire d'atterrissage (11),
- un espace de rangement (2), dans lequel les plusieurs segments (3) sont aptes à être rangés au moins partiellement dans un état de stockage, et
- une base (5) avec un élément rotatif (4) formant rotor, afin de faire tourner les plusieurs segments (3) pour les amener à l'état de fonctionnement et/ou à l'état de stockage,
**caractérisé en ce que**
- au moins certains segments de la pluralité de segments (3) sont fixés de manière amovible à l'élément formant rotor (4) et une unité de fixation (8) de l'agencement (1) d'aire d'atterrissage est conçue de façon à fixer les segments amovibles (3) à l'élément formant rotor (4) lors du passage à l'état de fonctionnement et pour libérer cette fixation lors du passage à l'état de stockage, et
- l'agencement (1) d'aire d'atterrissage comprend en outre une unité de levage (9) qui comprend un ou plusieurs éléments de levage (10) agencés dans ou sur l'espace de rangement (2) de façon à déplacer les segments amovibles (3) vers l'élément formant rotor (4) lors du passage à l'état de fonctionnement.

2. Agencement (1) d'aire d'atterrissage selon la revendication 1,
**caractérisé en ce que**
l'élément formant rotor (4) est immobile par rapport à l'espace de rangement (2) parallèlement à son axe de rotation, notamment dans la direction verticale.

3. Agencement (1) d'aire d'atterrissage selon l'une des revendications précédentes,
**caractérisé en ce que**
l'unité de fixation (8) sur l'élément formant rotor (4) présente au moins une poche destinée à recevoir les segments amovibles (3).

4. Agencement (1) d'aire d'atterrissage selon l'une des revendications précédentes,
**caractérisé en ce que**
les segments comprennent des moyens d'arrêt respectifs (12) pour relier entre eux, de manière amovible, les segments de la pluralité de segments (3) dans l'état de fonctionnement.

5. Agencement (1) d'aire d'atterrissage selon l'une des revendications précédentes,
**caractérisé en ce que**
exactement un des plusieurs segments (3) est agencé de manière fixe sur l'élément formant rotor (4).

6. Agencement (1) d'aire d'atterrissage selon la revendication 5,
**caractérisé en ce que**
le segment (3, 15) agencé de manière fixe sur l'élément formant rotor (4) est conçu de façon à être plus grand que les segments amovibles (3) et est conçu de façon à recouvrir l'espace de rangement (2), en particulier de manière étanche à l'eau.

7. Agencement (1) d'aire d'atterrissage selon l'une des revendications précédentes,
**caractérisé en ce que**
des bras de support (7) sont agencés sur la base (5) de façon à soutenir l'aire d'atterrissage (11).

8. Agencement (1) d'aire d'atterrissage selon l'une des revendications précédentes,
**caractérisé en ce que**
les bras de support (7) présentent, à leur extrémité respective opposée à la base (5), un élément de support (14) apte à être déployé verticalement.

9. Agencement (1) d'aire d'atterrissage selon l'une des revendications précédentes,
**caractérisé en ce que**
au moins l'un des bras de support (7) forme, dans l'état de stockage, une surface latérale (6) de l'espace de rangement (2) et/ou rend celui-ci étanche, notamment à l'eau.

10. Agencement (1) d'aire d'atterrissage selon l'une des revendications précédentes,
**caractérisé en ce que**
les plusieurs segments (3) sont formés au moins sensiblement selon un secteur de cercle ou un triangle.

11. Procédé de mise en œuvre d'un agencement (1) d'aire d'atterrissage comprenant les étapes suivantes pour faire passer l'agencement (1) d'aire d'atterrissage d'un état de stockage à un état de fonctionnement :
- déplacement d'une pluralité de segments amovibles (3) stockés dans un espace de stockage (2) de l'agencement (1) d'aire d'atterrissage en direction d'un élément formant rotor (4) de l'agencement (1) d'aire d'atterrissage au moyen d'une unité de levage (9), qui comprend un ou plusieurs éléments de levage (10) agencés dans ou sur l'espace de stockage (2),
- fixation de la pluralité de segments amovibles (3) logés dans l'espace de rangement (2) de l'agencement (1) d'aire d'atterrissage à l'élément formant rotor (4) de l'agencement (1) d'aire d'atterrissage, et
- déploiement de la pluralité de segments (3) en faisant tourner l'élément formant rotor (4), et/ou avec les étapes suivantes pour faire passer l'agencement (1) d'aire d'atterrissage de l'état de fonctionnement à l'état de stockage :
- regroupement de la pluralité de segments (3) par rotation de l'élément formant rotor (4), et
- desserrage de la fixation des segments amovibles (3), puis déplacement des segments (3) au moyen de l'unité de levage (9) dans l'espace de rangement de l'agencement (1) d'aire d'atterrissage.

12. Procédé selon la revendication 11,
**caractérisé en ce que**
la fixation de la pluralité de segments (3) est effectuée individuellement l'un après l'autre et l'élément formant rotor (4) est mis en rotation sur un angle prédéterminé (20) avant la fixation d'un segment (3, 22) devant être fixé ensuite.
